# EUROPÄISCHE PATENTSCHRIFT

(11) **EP 1 919 624 B1**
(45) Veröffentlichungstag und Bekanntmachung des Hinweises auf die Patenterteilung: **30.05.2012**
(21) Anmeldenummer: 06762794.3
(22) Anmeldetag: 25.07.2006
(51) Int. Cl.: B02C 13/18, B02C 13/14, B02C 13/288

(54) **TROCKNUNGSMÜHLE UND VERFAHREN ZUM TROCKNEN VON MAHLGUT**
DRYING MILL AND METHOD OF DRYING GROUND MATERIAL
BROYEUR-SECHEUR ET PROCEDE POUR SECHER UNE MATIERE BROYEE

(30) Priorität: 25.07.2005 EP 05016107
(43) Veröffentlichungstag der Anmeldung: 14.05.2008
(73) Patentinhaber: Claudius Peters Projects GmbH, 21614 Buxtehude (DE)
(72) Erfinder: GÖCKE, Volker, 21702 Kakerbeck (DE)
(74) Vertreter: Glawe, Delfs, Moll
(86) Internationale Anmeldenummer: PCT/EP2006/007301
(87) Internationale Veröffentlichungsnummer: WO 2007/012452

(56) Entgegenhaltungen:
- EP-A- 0 513 779
- EP-A- 1 072 854
- EP-A2- 0 325 770
- GB-A- 352 443
- JP-A- 57 087 852
- US-A- 4 398 673
- US-A- 5 275 631

## Beschreibung

Die Erfindung betrifft eine Trocknungsmühle für grob- oder feinkörniges Gut, insbesondere auch geeignet für Kalzinierung von Gips, mit einem Gehäuse, in dem übereinander eine in einem unteren Bereich mündende Zufuhreinrichtung für ein Treibgas und eine Zerkleinerungseinrichtung angeordnet sind.

Mühlen mit Trocknungsfunktion finden insbesondere Verwendung in Anlagen zum Kalzinieren von Gips. Das Rohmaterial muss vor dem Brennen zerkleinert werden. Eine Kalzinieranlage weist daher als wesentliche Komponente eine Mahlvorrichtung auf. Das gilt insbesondere bei der Verarbeitung von Recyclinggips, wie REA-Gips, als Ausgangsmaterial.

Aus offenkundiger Vorbenutzung sind Trocknungsmühlen bekannt, die auf einer Kugelringmühle basieren. Sie werden beispielsweise von Claudius Peters Technologies unter der Bezeichnung EM-Mühle vertrieben. Sie weist eine Mahleinrichtung auf, die aus mehreren großen, auf einer Mahlbahn ablaufenden Mahlkugeln besteht. Im Betrieb wird das gemahlene Gut nach außen abgegeben, dort von einem aufsteigenden Treibgasstrom erfasst und getrocknet, bis es einen vertikal oberhalb der Mahleinrichtung angeordneten Sichter erreicht. Übergroße Partikel können von dem Treibgasstrom nicht nach oben transportiert werden, sondern fallen auf die Mahlbahn zurück. Das den Sichter erreichende Gut wird in eine Fein- und eine Grobfraktion getrennt, wobei die Grobfraktion über Führungen zurück in die Mahleinrichtung geführt wird. Die Feinfraktion wird ausgeschieden und von der Mühle abgegeben. Diese Mühlen liefern zwar sehr gute Ergebnisse und sind ausgesprochen standfest, eignen sich aber nicht zur Verarbeitung aller Rohmaterialien. Schwierigkeiten können solche Materialen bereiten, die sich besser durch Zerschlagen als durch Zerquetschen, wie beim Mahlen, zerkleinern lassen. Auch ist der Energieaufwand zum Antreiben des schweren Mahlwerks recht hoch.

Zur Verarbeitung von solchen Materialien, bei denen das Zerkleinern wesentlich durch ein Auflösen von Agglomerationen bestimmt ist, ist eine andere Bauart bekannt geworden. Es handelt sich hierbei um eine solche mit einer Hammermühle wie sie z.B. aus GB 352443 bekannt ist. Sie wird beispielsweise unter der Bezeichnung Delta Mill von Claudius Peters Technologies vertrieben. Sie weist ein Hammermühlenwerk und ein daneben auf derselben Antriebswelle angeordnetes Sichterwerk auf. Das von einer Seite dem Hammermühlenwerk zugeführte Gut wird gemahlen, und von einem Treibgasstrom in das Sichterwerk weitertransportiert. Das Sichterwerk umfasst Paddel, welche übergroße Partikel zurückweisen und nur feine Partikel zu einem Auslass weiterleiten. Derartige Hammermühlen eignen sich zwar zur Verarbeitung von Gut, das mit der Kugelringmühle nicht oder nur schwer zu verarbeiten ist, weisen aber auch Nachteile auf. Hammermühlen sind empfindlich gegenüber Fremdkörpern, und sie sind wegen der bewegten Hammerelemente verschleißanfälliger. Außerdem benötigen sie wegen der horizontalen Lage der Antriebsachse für das Hammermühlenwerk verhältnismäßig viel Raum.

Der Erfindung liegt die Aufgabe zu Grunde, ausgehend von der zuerst genannten Bauart eine Mühle mit Trocknungsfunktion zu schaffen, die bei hoher Standfestigkeit weniger aufwendig ist, sowie ein entsprechendes Betriebsverfahren bereitzustellen. Die erfindungsgemäße Lösung liegt in den Merkmalen der unabhängigen Ansprüche. Vorteilhafte Weiterbildungen sind Gegenstand der abhängigen Ansprüche.

Bei einer Trocknungsmühle für pulverförmiges oder feinkörniges Gut, insbesondere auch geeignet für Kalzinierung von Gips, mit einem einen Arbeitsraum umgebenden Gehäuse, in dem übereinander eine in einem unteren Bereich mündende Zufuhreinrichtung für ein Treibgas, eine Zerkleinerungseinrichtung und ein Materialeinlass vorgesehen sind, der das Gut von oben auf die Zerkleinerungseinrichtung aufgibt, wobei von einem oberen Bereich des Arbeitsraums ein Materialauslass nach außen und eine Rückführung nach unten zur Zerkleinerungseinrichtung führen, wobei die Zerkleinerungseinrichtung eine in horizontaler Ebene drehende Schleuderscheibe ist, die mit einem innen am Gehäuse angeordneten Prallmantel zusammenwirkt, ist gemäß der Erfindung vorgesehen, dass ein die Schleuderscheibe von unten umgebender Düsenring zur Zuführung von Treibgas in den Arbeitsraum vorgesehen ist.

Kern der Erfindung ist das funktionale Zusammenwirken von der Schleuderscheibe und dem Düsenring, wobei die Schleuderscheibe als Zerkleinerungseinrichtung dient, von der das zu zerkleinernde Gut gegen einen Prallmantel abgeschleudert wird, wodurch das Gut einen hohen Impuls erhält, der sowohl zur Disagglomeration wie auch zur Bewegung der Fragmente in stochastisch verteilter Weise führt; wobei weiter durch den Düsenring, der die Schleuderscheibe von unten umgibt, Treibgas gerichtet in den Arbeitsraum zugeführt wird, um so die Fragmente bereits in unmittelbarer Nähe der Schleuderscheibe mittels des Treibgases zu fluidisieren und aufwärts in Richtung des Materialauslasses zu bewegen. Große und damit schwere Partikel können nicht folgen, sondern fallen zurück auf den Schleuderteller, von dem sie wiederum abgeschleudert und zerkleinert werden. Die Rückführung braucht nicht unbedingt als eigenes strukturelles Element ausgeführt zu sein, sondern die Partikel können auch durch den freien Raum allein durch Gravitation zurückfallen. Es findet so in dem Arbeitsraum eine Art Umwälzzerkleinerung statt, bei der zugleich eine Trocknung durch den Treibgasstrom erfolgen kann. Das Gut ist zuverlässig zerkleinert, wenn es schließlich den Materialauslass erreicht. Die erfindungsgemäße Mühle weist damit eine innere Rückführung auf, die ohne gesonderte Komponenten auskommt und nahezu verschleißfrei einen hohen Zerkleinerungsgrad erreicht. Die Robustheit gegenüber Fremdkörpern ist hoch, da es keine aufeinander laufenden Teile gibt, die durch Fremdkörper blockiert werden könnten. Der Aufbau ist wenig aufwendig und der Betrieb benötigt nur wenig Energie, da nur der verhältnismäßig leichte Schleuderteller angetrieben zu werden braucht. Die Erfindung verbindet damit auf verblüffend einfache Weise Vorteile hinsichtlich einfachem Aufbau, günstigem Betrieb mit geringem Verschleiß.

Es ist zweckmäßig, den zum Antrieb der Schleuderscheibe vorgesehenen Motor außerhalb des Arbeitsraums anzuordnen. Das gewährleistet einen guten Zugang für Wartungszwecke und schützt den Motor vor Verschleiß auf Grund des Mahlstaubs. Außerdem ergibt sich gegenüber einer Anordnung im Arbeitsraum eine einfachere und bessere Kühlung. Ferner ist der Schleuderteller mit Vorteil über ein Luftlager gelagert. Dies sichert nicht nur einen reibungsarmen Betrieb, sondern bietet auch eine hohe Resistenz gegenüber Verschleiß aufgrund Mahlstaubs. Der Verzicht auf ein geschmiertes Lager vereinfacht außerdem die Wartung. Der Prallmantel ist zweckmäßigerweise mehrteilig mit mehreren Segmenten ausgeführt. Die Segmente sind Verschleißteile. Mit einer solchen mehrteiligen Ausführung können sie bei Bedarf einzeln ausgewechselt werden. Außerdem ist die Handhabung erleichtert.

Zum Schutz der Umgebung vor Mahlstaub ist es günstig, einen Unterdruckanschluss vorzusehen. Damit kann die Trocknungsmühle mit Unterdruck beaufschlagt werden, so dass ein Austreten von Mahlstaub verhindert werden kann. Als günstig hat sich ein Unterdruck im Bereich von -15 mbar bis -3 mbar erwiesen. Zur Aufgabe des Materials ist zweckmäßigerweise eine Druckschleuse am Materialeinlass vorgesehen.

Das über den Düsenring in den Arbeitsraum zugeführte Treibgas kann zur Erhöhung der Trocknungswirkung vorzugsweise mit erhöhter Temperatur (als sogenanntes Heißgas) zugeführt werden. Die Temperatur des zugeführten Heißgases liegt vorzugsweise im Bereich zwischen 100 und 400 °C, wenn primär ein Trocknen des verkleinerten Guts erzielt werden soll; sie liegt vorzugsweise im Bereich zwischen 500 und 700 °C, wenn über das Trocknen hinaus auch bereits eine Kalzinierung des zerkleinerten Guts mit erreicht werden soll. Um insbesondere den Kalzinierprozess sachgemäß zu steuern, muss der Heißgaszuführungsstrom in die Mühle dementsprechend geregelt werden. Dazu wird der Düsenring zweckmäßig mit einer Einstelleinheit in Form von verstellbarem Luftspalt versehen, der die Durchflussgeschwindigkeit des Heißgases durch den Düsenring einstellt bzw. begrenzt. Durch die Zuführung von Heißgas mittels Düsenring wird die Erfindung in besonders zweckmäßiger Weise derart weitergebildet, dass über die Temperatur sowie die Durchflussgeschwindigkeit des Heißgases der Prozessverlauf, insbesondere eines Kalzinierprozesses, beeinflusst werden kann. So kann die Kalzinierung schon beim Zerkleinern erfolgen, wobei wegen des erfindungsgemäßen Umwälzbetriebs eine besonders lange Kontaktzeit und damit Energieausnutzung erreicht wird. Die erfindungsgemäße Mühle kann somit als Vorreaktor fungieren.

Zum Schutz des Prallmantels und ggf. des Düsenrings vor Fremdkörpern kann an dem Rand der Schleuderscheibe ein Siebkorb vorgesehen sein. Der Siebkorb verhindert einen Durchgang der Fremdkörper und von überschweren Fragmenten. Der Gefahr von Beschädigungen oder Verstopfungen wird damit entgegengewirkt.

Bei einer besonders zweckmäßigen Ausführungsform, die gegebenenfalls unabhängigen Schutz verdient, ist im oberen Bereich des Arbeitsraums ein Sichter angeordnet, der eine Grobfraktion des von der Schleuderscheibe aufsteigenden Guts zur Rückführung an die Schleuderscheibe abtrennt. Der Sichter kann dabei ein statischer oder ein dynamischer Sichter sein. Er verbessert die Klassifizierung des Mahlguts in Grob- und Feinfraktion. Außerdem unterstützt und verstärkt er den erfindungsgemäßen Umwälzbetrieb und bewirkt damit eine Steigerung der Zerkleinerungsqualität. Über die Einstellung des Sichters kann die erreichte Zerkleinerungsqualität direkt beeinflusst werden. Bei dynamischen Sichtern kann dies leicht über eine Veränderung der Umlaufgeschwindigkeit erfolgen.

Vorzugsweise ist ausgehend von dem Sichter ein nach unten weisender Rückführkanal vorgesehen, durch den die Grobfraktion mittels Schwerkraft auf die Schleuderscheibe gefördert wird. Damit ist ein kontrollierter Pfad für die vom Sichter abgeschiedene Grobfraktion in dem Arbeitsraum gewährleistet. Es wird damit erreicht, dass die Grobfraktion zuerst auf den Schleuderteller trifft und noch mal zerkleinert wird, bevor sie wieder zu dem Sichter hin aufsteigt. Der Rückführkanal mündet vorzugsweise in der Nähe des Materialeinlasses, so dass die Grobfraktion sich mit neu aufgegebenem Gut vermischt, und nicht mit dem Mahlgut.

Gemäß dem erfindungsgemäßen Verfahren ist beim Zerkleinern von pulverförmigem oder feinkörnigem Gut, insbesondere Gips, umfassend ein Zuführen des Guts, Aufgeben des Guts auf eine Zerkleinerungseinrichtung von oben, Zerkleinern des Guts mittels horizontalen Schleuderns des Guts gegen einen Prallmantel, Aufwärtsbewegen des zerkleinerten Guts mittels eines Treibgasstroms und Abführen des zerkleinerten Guts, sowie Wiederholen des Schleuderns unter Rückführung von größeren Bestandteilen mittels Schwerkraft vorgesehen, dass das Treibgas über einen Düsenring zugeführt wird und ein Kalzinieren des Guts in dem Treibgasstrom erfolgt. Mit dem mittels des Düsenrings dem Arbeitsraum zugeführten Treibgasstrom, der Heißgasstrom sein kann, wird nicht nur der Transport des zerkleinerten Guts bewirkt, sondern es kann auch ein Trocknen, insbesondere ein Kalzinieren bewirkt werden.

Das Treibgas wird erwärmt zugeführt oder mit erwärmtem Gas vermischt. Das so temperierte Treibgas wird als Heißgas bezeichnet. Durch Zuführung des Heißgases von unten in den Arbeitsraum über den Düsenring wird die thermische Konvektion besser ausgenutzt. Eine günstige Temperatur liegt im Bereich von 500 bis 700 °C. Darüber kann, insbesondere in Verbindung mit einer Regulierung des Treibgasstroms mittels des für den Düsenring vorgesehen Luftspaltes, die Temperatur des Kalzinierens in dem Reaktor und die des Guts beim Verlassen über den Materialauslass reguliert werden.

Das Mahlgut wird vorzugsweise mittels eines in dem oberen Bereich des Reaktors angeordneten Sichters klassifiziert. Das Klassifizieren kann mittels statischem oder vorzugsweise dynamischem Sichter erfolgen. Zweckmäßigerweise wird dabei die Schleuderscheibe von außen angetrieben. Damit ist der Antrieb geschützt vor Beeinträchtigungen durch das Gut.

Im Betrieb wird der Reaktor zweckmäßigerweise mit Unterdruck beaufschlagt. Der Gefahr eines unerwünschten Austretens von Mahlgut, insbesondere auf Grund von Leckagen, wird damit entgegengewirkt. Als günstig hat sich ein Unterdruck im Bereich von -15 mbar bis -3 mbar erwiesen. Die Aufgabe von Material erfolgt dazu zweckmäßigerweise über eine Druckschleuse.

Zur näheren Erläuterung wird auf obenstehende Beschreibung der Trocknungsmühle verwiesen.

Die Erfindung wird nachfolgend unter Bezugnahme auf die Zeichnung erläutert, in der ein vorteilhaftes Ausführungsbeispiel dargestellt ist. Es zeigen:
- Fig. 1: eine schematische Übersichtsdarstellung einer Kalzinieranlage;
- Fig. 2: eine Schnittansicht eines Ausführungsbeispiels für eine erfindungsgemäße Trocknungsmühle; und
- Fig. 3: eine Aufsicht auf eine Schleuderscheibe der in Fig. 2 dargestellten Trocknungsmühle.

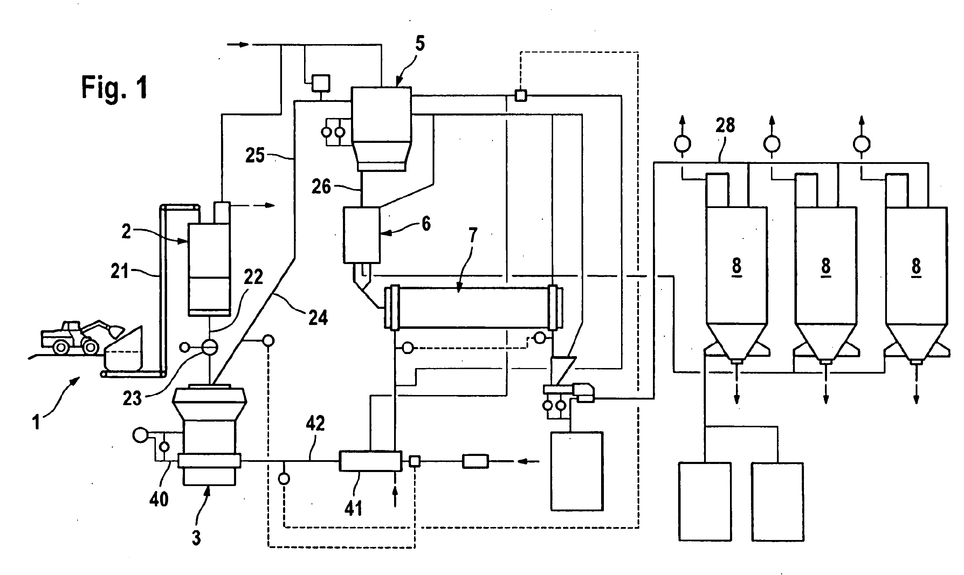

Zuerst wird auf Fig. 1 Bezug genommen. Sie zeigt die Einbindung de erfindungsgemäßen Trocknungsmühle in eine Kalzinieranlage und dient weiter zur Verdeutlichung der Verfahrensführung.

An einer Aufgabestelle 1 wird Rohmaterial in die Kalzinieranlage eingebracht. Bei dem Rohmaterial kann es sich insbesondere um recycelte Gipsprodukte wie Gipsbauplatten und auch um sog. REA-Gips aus Rauchgasentschwefelungsanlagen handeln. Für diesen wie für andere Arten von synthetischem Gips, wie Phosphorgips, eignet sich die Erfindung besonders. Von der Aufgabestelle 1 gelangt das Gips-Rohmaterial mittels einer geeigneten Fördereinrichtung 21 in einen Speichersilo 2. Dieser ist erhöht angeordnet und befindet sich oberhalb, wenn auch nicht unbedingt genau oberhalb, einer erfindungsgemäßen Trocknungsmühle 3. Das Rohmaterial gelangt über ein Fallrohr 22 mit einem Steuerschieber 23 durch Schwerkraft zu einer Druckschleuse der Trocknungsmühle 3. An sie ist weiter angeschlossen eine Treibgasquelle, die einen Heißgasgenerator 41 umfasst, der über eine Zuleitung 42 an einen Düsenring 45 angeschlossen ist. Weiter ist ein Anschluss 40 zur Beaufschlagung der Trocknungsmühle 3 mit Unterdruck vorgesehen. Der Aufbau und die Funktionsweise der Trocknungsmühle 3 werden später näher beschrieben.

Der nunmehr gemahlene Gips verlässt die Trocknungsmühle 3 über eine Steigleitung 25 und gelangt in eine Filteranlage 5. Von dort wird er über eine Leitung 26 zu einer Weiterbehandlungsstufe 6 transportiert und weiter an ein Aufgabeende eines Drehrohrkühlers 7. Dort wird der Gips zum Kühlen aufgegeben. Der gekühlte und gebrannte Gips wird danach über Verteilerleitungen 28 in Speichersilos 8 geleitet. Aus diesen kann er nach Bedarf entnommen werden.

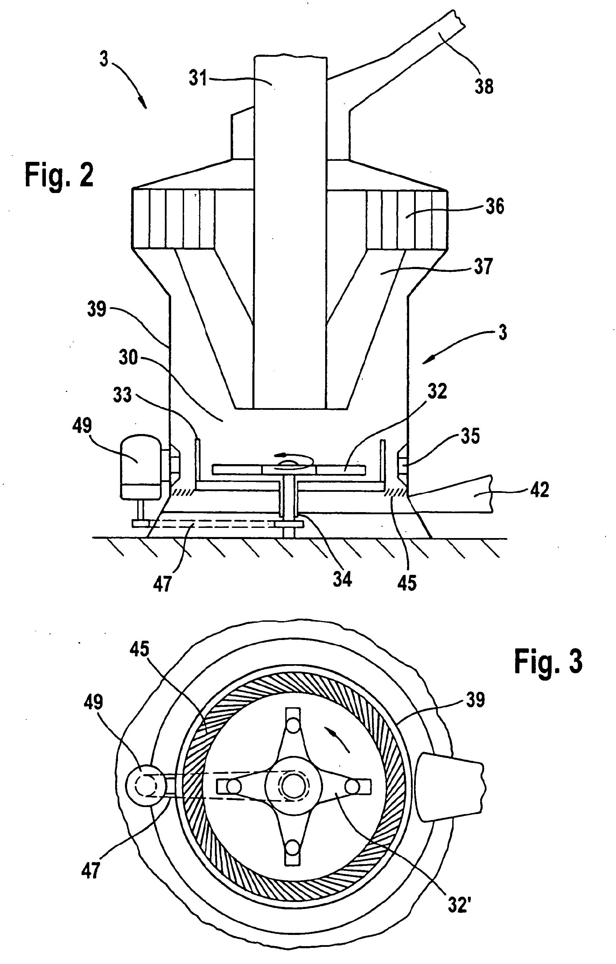

Es wird nun Bezug genommen auf Fig. 2. Der Gips erreicht die Trocknungsmühle 3 über die Druckschleuse (nicht dargestellt). Sie dient dazu, den Unterdruck in der Trocknungsmühle 3 aufrecht zu erhalten. Die Druckschleuse geht über in einen Materialeinlass 31, der in das Innere der Trocknungsmühle 3 in einen Arbeitsraum 30 führt. Der Materialeinlass 31 endet in einem vertikal von oben nach unten in dem Arbeitsraum 30 verlaufenden und zentral angeordneten Fallrohr. Aus diesem fällt der Rohmaterial-Gips direkt von oben auf eine unmittelbar darunter zentrisch angeordnete Schleuderscheibe 32. Um eine unsymmetrische Aufgabe des Rohgipses zu vermeiden, mündet der Materialeinlass 31 genau oberhalb der Mitte der Schleuderscheibe 32. Zwischen der Mündung des Materialeinlasses 31 und der Schleuderscheibe kann ein zentrisch angeordneter Konus (nicht dargestellt) vorgesehen sein. Er dient dazu, das einlaufende Rohmaterial gleichmäßig über die Schleuderscheibe 32 zu verteilen.

Die Schleuderscheibe 32 ist über ein Riemengetriebe 47 mit einem Antriebsmotor 49 verbunden. Er ist zum Schutz vor Beeinträchtigungen vor Mahlstaub und zur besseren Kühlung sowie leichteren Wartbarkeit außerhalb des Arbeitsraums 30 an der Gehäusewand 39 angeordnet. Um den Wartungsaufwand weiter zu verringern, kann auch ein Wellenantrieb mit Winkelgetriebe vorgesehen sein. Der Antriebsmotor 49 ist an eine Drehzahlsteuerung angeschlossen, so dass unterschiedliche Parameter in Abhängigkeit von dem Betriebszustand der Trocknungsmühle 3 eingestellt werden können. Gelagert ist die Schleuderscheibe über ein am Boden angeordnetes Luftlager 34. Die Schleuderscheibe 32 wird wie beschrieben in eine schnelllaufende Umlaufbewegung von einigen hundert Umdrehungen pro Minute versetzt.

Das Rohmaterial gelangt aus dem Materialeinlass 31 auf die Schleuderscheibe 32, und wird stochastisch in verschiedene Richtungen verteilt. Auf der Schleuderscheibe 32 sind Körper (nicht dargestellt) mit Schlagkanten angeordnet. Das Rohmaterial gelangt in Kontakt mit den Schlagkanten, und wird dabei vorzerkleinert. Das von den Schlagkanten erfasste Material wird in eine Drehbewegung gezwungen und von der Schleuderscheibe 32 abgeschleudert. Es bewegt sich tangential nach außen, und trifft auf einen Prallmantel 35. Er ist etwa auf gleicher Höhe, und zwar etwa vermindert um den zu erwartenden Höhenverlust der Partikel nach dem Abschleudern, mit und beabstandet von der Schleuderscheibe 32 angeordnet. Durch den Kontakt mit den Schlagkanten und den Aufprall auf den Prallmantel 35 wird das Rohmaterial gebrochen, d. h. in kleinere Partikel zerlegt. Die Schleuderscheibe 32 kann so ausgebildet sein, dass sie eine scheibenartige Grundstruktur mit auf einer Stirnfläche aufgesetzten Schlagkanten aufweist. Ferner weist sie an ihrem äußeren Rand einen Siebkorb 33 auf. Die Weite seiner Durchbrechungen ist derart gewählt, dass Fremdkörper und übergroße Partikel, die zu einer Beschädigung des Prallmantels 35 führen könnten, zurückgehalten werden. Die Schleuderscheibe 32 kann bei einem alternativen Ausführungsbeispiel aber auch so ausgebildet sein, dass sie eine kreuzartige Grundstruktur 32' mit erhabenen, Schlagkanten tragenden Körpern an den jeweiligen Enden der Arme des Kreuzes aufweist. Die gegen den Prallmantel 35 geschleuderten Partikel füllen in nahezu homogener Weise den Arbeitsraum 30. Anbackungen und tote Zonen in dem Arbeitsraum 30 können so zuverlässig vermieden werden.

Das von dem Heißgasgenerator 41 erzeugte Treibgas wird Düsenring 45 zugeführt, der die Schleuderscheibe 32 umgibt und knapp unterhalb des Abschleuderbereichs der Schleuderscheibe 32 angeordnet ist. Das heiße Treibgas (Heißgas) steigt durch den Zwischenraum zwischen der Schleuderscheibe 32 und dem Prallmantel 35 auf, und nimmt dabei Mahlgut in Gestalt gebrochener Partikel mit. Dabei fluidisiert der von dem Heißgas gebildete Gasstrom die zerkleinerten Partikel, das Mahlgut, transportiert sie so nach oben in den oberen Bereich des Arbeitsraums 30 und trocknet sie dabei.

Außerdem kann dabei schon eine Kalzinierung begonnen werden. Dies kann dann erfolgen, wenn die Temperatur des Heißgases, dessen Zustromgeschwindigkeit in die Arbeitsraum über den Luftspalt des Düsenrings 45 geregelt wird, in Abhängigkeit vom Durchsatz an Mahlgut zwischen 400 und 700 °C beträgt, vorzugsweise etwa 630 °C. Die Zumischung von Heißgas wird dazu so eingestellt, dass das Mahlgut eine Austrittstemperatur von 140 bis 190 °C, vorzugsweise 158 °C, aufweist. Diese Temperatur ist ausreichend hoch, um eine Fortsetzung der Kalzinierung durch die Eigentemperatur des Gipses nach Verlassen der Trocknungsmühle 3 zu ermöglichen. Der Energieeinsatz für den Kalzinierprozess kann damit insgesamt verringert werden. Außerdem kann durch die bessere Ausnutzung der Eigenenergie beim Zerkleinern des Rohmaterials die zum anschließenden Kühlen erforderliche Energiemenge verringert werden.

Beim Aufsteigen können ungemahlene und damit übergroße und überschwere Partikel nicht folgen, und fallen zurück nach unten auf die Schleuderscheibe 32. Von ihr werden sie erfasst und erneut gegen den Prallmantel 35 geschleudert. Es findet also ein Umwälzverfahren für das Mahlgut statt. Versuche haben gezeigt, dass mit bis zu drei Wiederholungen zu rechnen ist. Eine räumliche Trennung der Rückführung ist nicht erforderlich. Mit diesem Aufbau ermöglicht die Erfindung eine Verfahrensführung, bei der dank des Umwälzens eine gute Zerkleinerung des Mahlguts bei einfachem Aufbau und eine Kalzinierung auch bei geringem Energieeinsatz erreicht wird.

In Fig. 2 ist weiterhin ein optionaler Sichter 36 dargestellt. Er ist unmittelbar oberhalb der Schleuderscheibe 32 angeordnet. Der Sichter kann statisch oder wie im dargestellten Ausführungsbeispiel dynamisch sein. Dazu ist ein (nicht dargestellter) Antrieb vorgesehen. Über die Umdrehungsgeschwindigkeit des Sichters 36 lässt sich seine Trennweise zwischen Fein- und Grobfraktion beeinflussen. Unmittelbar am Sichter 36 beginnt ein Rückführkanal 37. Er bildet einen definierten Pfad für die Rückführung der Grobfraktion. Er ist als Zentralkanal ausgeführt und umschlingt den Materialeinlass 31. Damit wird erreicht, dass das von dem Sichter 36 zurückgewiesene Mahlgut zusammen mit dem neu eingebrauchten Gut vermischt auf den Schleuderteller 32 aufgebracht wird. Zwischen Rückführkanal 37 und Gehäuse 39 der Trocknungsmühle 3 verbleibt ein ringartiger Zwischenraum, der als Steigrohr für die fluidisierten Partikel dient. Damit sind die Pfade, auf denen die zerkleinerten Partikel von der Schleuderscheibe 32 mit dem Prallmantel 35 zu dem Sichter 36 bzw. die Grobfraktion von dem Sichter 36 zurück zur Schleuderscheibe 32 gelangen, voneinander getrennt. Die Grobfraktion durchläuft noch mal den regulären Zerkleinerungsprozess, und wiederholt dies im Umwälzbetrieb so lange wie erforderlich. Der die Erfindung tragende Gedanke der Umwälzung wird hiermit fortgeführt.

Die Partikelmenge, die von dem Sichter 36 als Feinfraktion klassifiziert ist, wird über einen Materialauslass 38 aus der Trocknungsmühle 3 abgeführt, und gelangt, wie vorstehend beschrieben, über die Steigleitung 25 zu der Filteranlage 5. Mittels des Sichters 36 kann auf einfache und zweckmäßige Weise die Verweilzeit des Materials in dem Arbeitsraum 30 beeinflusst werden. Durch Erhöhen der Umdrehungszahl bei einem dynamischen Sichter 36 wird der Anteil der zurückgeführten Grobfraktion erhöht. Die Verweilzeit steigt dadurch. Damit kann der Reaktionsverlauf des Kalzinierprozesses beeinflusst werden.

Die wesentlichen Vorteile der erfindungsgemäßen Trocknungsmühle und ihres Betriebsverfahrens, insbesondere für die Kalzinierung werden nachfolgend kurz zusammengefasst: Die Zerkleinerung des Rohmaterials erfolgt mittels einer mit wenig Aufwand herzustellenden und verschleißarm sowie energiesparend zu betreibenden Schleuderscheibe. Es ist eine innere Rückführung des zerkleinerten Materials vorgesehen. Dies verbessert die Qualität der Zerkleinerung durch Vergleichmäßigung kurzzeitiger Schwankungen, Sicherstellung einer ausreichenden Zerkleinerung und bessere Ausnutzung der Eigenenergie zur Kalzinierung. Der Energieverbrauch wird damit vermindert. Der Kalzinierungsprozess wird durch Ausnutzung der thermischen Energie des der Trocknungsmühle mittels eines die Schleuderscheibe von unten umgebenden Düsenrings in den Arbeitsraum zugeführten Heißgases und der Verweilzeit in dem Arbeitsraum in effizienter Weise gefördert.

## Patentansprüche

1. Trocknungsmühle für pulverförmiges oder feinkörniges Gut, insbesondere auch geeignet für Kalzinierung von Gips, mit einem einen Arbeitsraum (30) umgebenden Gehäuse (39), in dem übereinander eine in einem unteren Bereich mündende Zufuhreinrichtung (42) für ein Treibgas, eine Zerkleinerungseinrichtung und ein Materialeinlass (31) vorgesehen sind, der das Gut von oben auf die Zerkleinerungseinrichtung aufgibt, wobei von einem oberen Bereich des Arbeitsraums (30) ein Materialauslass (38) nach außen und eine Rückführung nach unten zur Zerkleinerungseinrichtung führen, wobei die Zerkleinerungseinrichtung eine in horizontaler Ebene drehende Schleuderscheibe (32) ist, die mit einem innen am Gehäuse (39) angeordneten Prallmantel (35) zusammenwirkt,
**dadurch gekennzeichnet, dass**
ein die Schleuderscheibe (32) von unten umgebender Düsenring (45) zur Zuführung von Treibgas in den Arbeitsraum (30) vorgesehen und der Düsenring (45) mit verstellbarem Luftspalt versehen ist.

2. Trocknungsmühle nach Anspruch 1,
**dadurch gekennzeichnet, dass**
ein Antriebsmotor (49) für die Schleuderscheibe (32) außerhalb des Arbeitsraums (30) angeordnet ist.

3. Trocknungsmühle nach Anspruch 1 oder 2,
**dadurch gekennzeichnet, dass**
die Schleuderscheibe (32) mit einem Luftlager (34) gelagert ist.

4. Trocknungsmühle nach einem der Ansprüche 1 bis 3,
**dadurch gekennzeichnet, dass**
der Prallmantel (35) mehrteilig mit mehreren auswechselbaren Segmenten ausgeführt ist.

5. Trocknungsmühle nach einem der Ansprüche 1 bis 4,
**dadurch gekennzeichnet, dass**
ein Unterdruckanschluss (40) vorgesehen ist, um den Arbeitsraum (30) mit Unterdruck zu beaufschlagen.

6. Trocknungsmühle nach einem der Ansprüche 1 bis 5,
**dadurch gekennzeichnet, dass**
ein Heißgasgenerator (41) über Zufuhreinrichtung (42) an den Düsenring (45) angeschlossen ist.

7. Trocknungsmühle nach einem der Ansprüche 1 bis 6,
**dadurch gekennzeichnet, dass**
die Schleuderscheibe (32) an ihrem Rand einen Siebkorb (33) aufweist.

8. Trocknungsmühle nach einem der Ansprüche 1 bis 7,
**dadurch gekennzeichnet, dass**
im oberen Bereich des Arbeitsraums (30) ein Sichter (36) angeordnet ist, der eine Grobfraktion des von der Schleuderscheibe (32) aufsteigenden Guts zur Rückführung an die Schleuderscheibe (32) abtrennt.

9. Trocknungsmühle nach Anspruch 8,
**dadurch gekennzeichnet, dass**
ein nach unten weisender Rückführkanal (37) vorgesehen ist, durch den die Grobfraktion mittels Schwerkraft auf die Schleuderscheibe (32) gefördert wird.

10. Verfahren zum Zerkleinern von pulverförmigem oder feinkörnigem Gut, insbesondere Gips, umfassend ein Zuführen des Guts, Aufgeben des Guts auf eine Zerkleinerungseinrichtung von oben, Zerkleinern des Guts mittels horizontalen Schleuderns des Guts gegen einen Prallmantel (35), Aufwärtsbewegen des zerkleinerten Guts mittels eines Treibgasstroms und Abführen des zerkleinerten Guts, sowie Wiederholen des Zerkleinerns durch Rückführen von größeren Bestandteilen mittels Schwerkraft,
**gekennzeichnet durch**
Zuführen des Treibgases über einen Düsenring (45), Regulierung des Treibgasstroms mittels eines für den Düsenring (45) vorgesehen vertellbaren Luftspaltes und Kalzinieren des Guts in dem Treibgasstrom.

11. Verfahren nach Anspruch 10,
**gekennzeichnet durch**
Antreiben einer Schleuderscheibe (32) von außen zum Zerkleinern des Guts.

12. Verfahren nach Anspruch 10 oder 11,
**gekennzeichnet durch**
Klassifizieren des Mahlguts mittels eines in dem oberen Bereich des Reaktors angeordneten Sichters (36).

13. Verfahren nach Anspruch 12,
**gekennzeichnet durch**
dynamisches Sichten.

14. Verfahren nach einem der Ansprüche 10 bis 13,
**gekennzeichnet durch**
Beaufschlagen des Reaktors mit Unterdruck, vorzugsweise in einem Bereich von -15 mbar bis -3 mbar.

15. Verfahren nach einem der Ansprüche 10 bis 14,
**gekennzeichnet durch**
Zuführen des Treibgases als Heißgas, vorzugsweise mit einer Temperatur von 500 bis 700 °C.

## Claims

1. Drying mill for powdery or fine-grained material, especially also suitable for calcining gypsum, with a housing (39) which encloses a working chamber (30) and in which a feed device (42) for a propelling gas, which leads to a lower region, a comminuting device and a material inlet (31), are provided one above the other, which material inlet feeds the material from the top onto the comminuting device, wherein a material outlet (38) leads outwards from an upper region of the working chamber (30), and a return passage leads downwards to the comminuting device, wherein the comminuting device is a centrifugal disk (32) which rotates in a horizontal plane and interacts with an impact casing (35) which is arranged on the housing (39) on the inside,
**characterized in that**
a nozzle ring (45), which encompasses the centrifugal disk (32) from the bottom, is provided for feeding propelling gas into the working chamber (30) and the nozzle ring (45) is provided with an adjustable air gap.

2. Drying mill according to Claim 1,
**characterized in that**
a drive motor (49) for the centrifugal disk (32) is arranged outside the working chamber (30).

3. Drying mill according to Claim 1 or 2,
**characterized in that**
the centrifugal disk (32) is supported by an air bearing (34).

4. Drying mill according to one of Claims 1 to 3,
**characterized in that**
the impact casing (35) is constructed in a multi-sectioned manner, with a plurality of exchangeable segments.

5. Drying mill according to one of Claims 1 to 4,
**characterized in that**
a negative pressure connection (40) is provided in order to charge the working chamber (30) with negative pressure.

6. Drying mill according to one of Claims 1 to 5,
**characterized in that**
a hot gas generator (41) is connected to the nozzle ring (45) via a feed device (42).

7. Drying mill according to one of Claims 1 to 6,
**characterized in that**
the centrifugal disc (32) has a strainer basket (33) on its edge.

8. Drying mill according to one of Claims 1 to 7,
**characterized in that**
a sifter (36), which separates a coarse fraction of material which rises from the centrifugal disk (32) for return to the centrifugal disk (32), is arranged in the upper region of the working chamber (30).

9. Drying mill according to Claim 8,
**characterized in that**
a downwards pointing return passage (37) is provided, through which the coarse fraction is transported by means of gravity force onto the centrifugal disk (32).

10. Method for comminuting powdery or fine-grained material, especially gypsum, comprising feeding the material, feeding the material onto a comminuting device from the top, comminuting the material by means of horizontal centrifuging of the material against an impact casing (35), upwards moving of the comminuted material by means of a propelling gas stream and discharging the comminuted material, as well as repeating the comminuting by returning larger components by means of gravity force,
**characterized by**
feeding the propelling gas via a nozzle ring (45), regulating the propelling gas stream by means of an adjustable air gap which is provided for the nozzle ring (45) and calcining the material in the propelling gas stream.

11. Method according to Claim 10,
**characterized by**
driving a centrifugal disk (32) from outside for comminuting the material.

12. Method according to Claim 10 or 11,
**characterized by**
classifying the ground material by means of a sifter (36) which is arranged in the upper region of the reactor.

13. Method according to Claim 12,
**characterized by**
dynamic sifting.

14. Method according to one of Claims 10 to 13,
**characterized by**
charging the reactor with negative pressure, preferably within a range of -15 mbar to -3 mbar.

15. Method according to one of Claims 10 to 14,
**characterized by**
feeding the propelling gas as hot gas, preferably at a temperature of 500 to 700°C.

## Revendications

1. Broyeur-sécheur destiné à des matières pulvérulentes ou à grain fin, en particulier également approprié pour la calcination du gypse, comportant un carter (39) entourant une chambre de travail (30), dans lequel sont prévus, les uns sur les autres, un dispositif d'amenée (42) pour un gaz propulseur débouchant dans une zone inférieure, un dispositif de concassage et une entrée de matériau (31) qui chargent le matériau par le haut sur le dispositif de concassage, sachant qu'une sortie de matériau (38) mène depuis une zone supérieure de la chambre de travail (30) vers l'extérieur et qu'un conduit de retour mène vers le bas jusqu'au dispositif de concassage, sachant que le dispositif de concassage est un disque centrifuge (32) tournant dans un plan horizontal, lequel disque coopère avec un revêtement de rebond (35) disposé sur le carter (39) à l'intérieur de ce dernier,
**caractérisé en ce que**
un anneau de buses (45) entourant par le bas le disque centrifuge (32) est prévu pour amener du gaz propulseur dans la chambre de travail (30), et **en ce que** l'anneau de buses (45) est pourvu d'une fente d'aération ajustable.

2. Broyeur-sécheur selon la revendication 1,
**caractérisé en ce que**
un moteur d'entraînement (49) pour le disque centrifuge (32) est disposé à l'extérieur de la chambre de travail (30).

3. Broyeur-sécheur selon la revendication 1 ou 2,
**caractérisé en ce que**
le disque centrifuge (32) est logé avec un palier d'air (34).

4. Broyeur-sécheur selon l'une quelconque des revendications 1 à 3,
**caractérisé en ce que**
le revêtement de rebond (35) est réalisé en plusieurs parties avec plusieurs segments interchangeables.

5. Broyeur-sécheur selon l'une quelconque des revendications 1 à 4,
**caractérisé en ce que**
un raccordement à dépression (40) est prévu pour soumettre la chambre de travail (30) à l'action d'une dépression.

6. Broyeur-sécheur selon l'une quelconque des revendications 1 à 5,
**caractérisé en ce que**
un générateur de gaz chaud (41) est raccordé à l'anneau de buses (45) par l'intermédiaire du dispositif d'amenée (42).

7. Broyeur-sécheur selon l'une quelconque des revendications 1 à 6,
**caractérisé en ce que**
le disque centrifuge (32) présente sur son bord un panier d'essorage en fil perforé (33).

8. Broyeur-sécheur selon l'une quelconque des revendications 1 à 7,
**caractérisé en ce que**
un séparateur à air (36) est disposé dans la zone supérieure de la chambre de travail (30), ledit séparateur à air séparant une fraction brute du matériau montant depuis le disque centrifuge (32) pour revenir sur le disque centrifuge (32).

9. Broyeur-sécheur selon la revendication 8,
**caractérisé en ce que**
un canal de retour (37) orienté vers le bas est prévu, à travers lequel la fraction brute est transportée sur le disque centrifuge (32) à l'aide de la force de gravité.

10. Procédé servant à concasser du matériau pulvérulent ou à grain fin, en particulier du gypse, comportant les étapes suivantes consistant à : amener le matériau, charger le matériau depuis le haut sur un dispositif de concassage, concasser le matériau au moyen d'une centrifugation horizontale du matériau contre un revêtement de rebond (35), déplacer en amont le matériau concassé au moyen d'un flux de gaz propulseur et évacuer le matériau concassé, et répéter l'étape de concassage par retour d'éléments plus grands au moyen de la force de gravité,
**caractérisé par**
l'amenée du gaz propulseur par l'intermédiaire d'un anneau de buses (45),
la régulation du gaz propulseur au moyen d'une fente d'aération ajustable prévue pour l'anneau de buses (45), et la calcination du matériau dans le flux de gaz propulseur.

11. Procédé selon la revendication 10,
**caractérisé par**
l'entraînement d'un disque centrifuge (32) par l'extérieur pour concasser le matériau.

12. Procédé selon la revendication 10 ou 11,
**caractérisé par**
le tri du matériau à broyer au moyen d'un séparateur à air (36) disposé dans la zone supérieure du réacteur.

13. Procédé selon la revendication 12,
**caractérisé par**
un criblage dynamique.

14. Procédé selon l'une quelconque des revendications 10 à 13,
**caractérisé par**
l'exposition du réacteur à l'action d'une dépression, de préférence comprise dans la plage allant de - 15 mbar à -3 mbar.

15. Procédé selon l'une quelconque des revendications 10 à 14,
**caractérisé par**
l'amenée du gaz propulseur en tant que gaz chaud, de préférence présentant une température allant de 500 à 700°C.
